# EUROPEAN PATENT SPECIFICATION

(11) **EP 3 313 041 B1**
(45) Date of publication and mention of the grant of the patent: **05.08.2020**
(21) Application number: 16810945.2
(22) Date of filing: 08.06.2016
(51) Int. Cl.: H04L 29/06, H04L 29/08, G06F 8/60, H04L 9/12

(54) **APPLICATION DOWNLOAD METHOD AND DEVICE**
VERFAHREN UND VORRICHTUNG ZUM HERUNTERLADEN EINER ANWENDUNG
PROCÉDÉ ET DISPOSITIF DE TÉLÉCHARGEMENT D'APPLICATION

(30) Priority: 16.06.2015 CN 201510334074
(43) Date of publication of application: 25.04.2018
(73) Proprietor: Alibaba Group Holding Limited, Grand Cayman (KY)
(72) Inventor: LI, Jiajia, Hangzhou 310099 (CN)
(74) Representative: Conroy, John
(86) International application number: PCT/CN2016/085213
(87) International publication number: WO 2016/202204

(56) References cited:
- CN-A- 103 440 281
- CN-A- 103 561 040
- CN-A- 103 841 272
- US-A1- 2013 163 758
- US-A1- 2013 198 364
- US-B1- 6 785 719

## Description

### Technical Field

The present application relates to the field of network communication technologies, and in particular, to an application download method and device.

### Background Art

An application program is a computer program which is developed to run on an operating system to complete one or multiple particular tasks. The application program runs in a user mode, and can directly interact with a user. Generally, an application has a visible user interface. With the increasing variety and usage of intelligent terminals, the number of application programs used thereon is also growing. Intelligent terminals are mainly characterized in that application programs can be installed and upgraded thereon. Therefore, how to rapidly and stably install and upgrade application programs on these intelligent terminals is an active demand to be satisfied.

In an existing solution, after an instruction of installing a new application or upgrading an old application is received from a user, an application package corresponding to the instruction is downloaded by using an HTTP (Hypertext Transfer Protocol) channel, and an application is installed or upgraded by installing the downloaded application package. However, data transmission based on an HTTP channel is transparent on the network, and a malicious person may easily tamper with data in the HTTP channel, thus severely affecting stability of application downloading. For example, the instruction of the user is an instruction of downloading an application A, but an installation package of an application B is downloaded in fact.

To enhance the stability of application downloading, the existing solution would further verify a locally downloaded application package by using verification information of the application package. If the verification fails, the application package corresponding to the instruction is downloaded again, till the verification succeeds. Because data in an HTTP channel has a high probability of being hijacked, it is required to cyclically perform downloading many times in practice to obtain the application package matching the instruction. A large amount of traffic data is undoubtedly consumed during the repeated downloading.

US 2013/0198364 A1 discloses A method of determining http process information while executing a secure web application which redirects to a separate an unsecure web application to determine the information and redirect the information back to the secure web application. US 2015/327107 discloses delivering keys to an OS platform for decrypting encrypted HTTP live streaming data. A manifest file indicating content to be streamed to mobile device from content server is obtained, the manifest file contains a URL for an HTTPS server and a playlist that indicates content items.

### Summary of the Invention

A technical problem to be solved by embodiments of the present application is to provide an application download method, which can reduce traffic data required for downloading an application. The present invention is defined by the claims.

Correspondingly, the embodiments of the present application further provide an application download device to ensure implementation and application of the foregoing method.

To solve the foregoing problem, the present application discloses an application download method, which includes:
downloading download description information of an application by using an HTTPS channel, wherein the download description information includes download address information; and
downloading a first application package corresponding to the download address information by using an HTTP channel.

Preferably, the download description information further includes download verification information, and the method further includes:
verifying the locally downloaded first application package according to the download verification information.

Preferably, the method further includes:
downloading a second application package corresponding to the download address information by using the HTTPS channel when the verification fails.

Preferably, the step of downloading download description information of an application by using an HTTPS channel includes:
downloading, in response to a download instruction of a user, download description information of an application corresponding to the download instruction by using the HTTPS channel; and/or
downloading, when a download condition is met, download description information of an application corresponding to the download condition by using the HTTPS channel.

Preferably, before the step of downloading a first application package corresponding to the download address information by using an HTTP channel, the method further includes:
locally storing the download description information of the application corresponding to the download condition; and
locally reading, in response to the download instruction of the user, the download description information of the application corresponding to the download instruction; and
the step of downloading a first application package corresponding to the download address information by using an HTTP channel is specifically: downloading the first application package corresponding to the read download address information by using the HTTP channel.

Preferably, the download condition includes one or more of the following conditions: when an application downloading tool is enabled, when an application is enabled, and when a synchronization request from a server is received.

Preferably, when the download condition is that the application downloading tool is enabled, the application corresponding to the download condition includes a pre-configured application, wherein the pre-configured application includes at least one of a popular application and a user configured application.

In another aspect, the present application further discloses an application download device, which includes:
a first downloading module configured to download download description information of an application by using an HTTPS channel, wherein the download description information includes download address information; and
a second downloading module configured to download a first application package corresponding to the download address information by using an HTTP channel.

Preferably, the download description information further includes download verification information, and the device further includes:
a first verification module configured to verify the locally downloaded first application package according to the download verification information.

Preferably, the device further includes:
a third downloading module configured to download a second application package corresponding to the download address information by using the HTTPS channel when the verification fails.

Preferably, the first downloading module includes:
a fourth downloading sub-module configured to download, in response to a download instruction of a user, download description information of an application corresponding to the download instruction by using the HTTPS channel; and/or
a fifth downloading sub-module configured to download, when a download condition is met, download description information of an application corresponding to the download condition by using the HTTPS channel.

Preferably, the device further includes:
a storage module configured to locally store the download description information of the application corresponding to the download condition before the second downloading module downloads the first application package corresponding to the download address information by using the HTTP channel; and
a reading module configured to locally read, in response to the download instruction of the user, the download description information of the application corresponding to the download instruction; and
the second downloading module is specifically configured to download the first application package corresponding to the read download address information by using the HTTP channel.

Preferably, the download condition includes one or more of the following conditions: when an application downloading tool is enabled, when an application is enabled, and when a synchronization request from a server is received.

Preferably, when the download condition is that the application downloading tool is enabled, the application corresponding to the download condition includes a pre-configured application, wherein the pre-configured application includes at least one of a popular application and a user configured application.

Compared with the prior art, the embodiments of the present application include the following advantages:
In the embodiments of the present application, download address information of an application is downloaded first by using an HTTPS channel, and then a first application package corresponding to the download address information is downloaded by using an HTTP channel. On the one hand, the HTTPS channel is a security-targeted HTTP channel and has higher security than the HTTP channel. Therefore, in comparison with an existing solution in which the download address information of the application is downloaded by using the HTTP channel, the embodiments of the present application can reduce the probability of hijacking the download address information, that is, can enhance the accuracy of the download address information, thus enhancing the accuracy of the locally downloaded first application package. Because a high-accuracy application package may reduce the number of times of cyclically downloading until verification succeeds, the embodiments of the present application can reduce traffic data required for downloading the application. On the other hand, because the download address information of the application merely needs to occupy a few bytes, the encrypted download address information has little influence on the length of data transmission, and an encryption process of the download address information has little influence on time consumption. Therefore, using the HTTPS channel to download the download address information of the application basically may not increase the traffic data required for downloading the application.

### Brief Description of the Drawings

FIG. 1 is a flowchart of steps of Embodiment I of an application download method according to the present application;
FIG. 2 is a flowchart of steps of Embodiment II of an application download method according to the present application;
FIG. 3 is a flowchart of steps of Embodiment III of an application download method according to the present application;
FIG. 4 is a flowchart of steps of Embodiment IV of an application download method according to the present application; and
FIG. 5 is a structural block diagram of an embodiment of an application download device according to the present application.

### Detailed Description

To make the above objectives, features, and advantages of the present application more obvious and understandable, the present application is further described in detail below with reference to the accompanying drawings and specific embodiments.

A process of downloading an application package by using an HTTP channel in an existing solution is specifically: successively downloading download address information and an application package of an application by using the HTTP channel. However, because data in the HTTP channel has a high probability of being hijacked, the download address information and the application package in the HTTP channel are both likely to be hijacked and tampered. Supposing that an application designated by a user to be downloaded is an application A, a download address of an application B is probably downloaded by using the HTTP channel in an existing solution. In the case where an error exists in the download address, the probability of downloading to obtain the application A is rather low.

An HTTPS (Hypertext Transfer Protocol over Secure Socket Layer) channel is a security-targeted HTTP channel, and briefly, is a secure HTTP channel. Specifically, an SSL (Secure Socket Layer) is added to the HTTP. The HTTPS uses the SSL as a secure basis, and completion of encryption and decryption operations needs the assistance from the SSL.

During data transmission by using the HTTPS channel, because original data needs to be encrypted in the HTTPS channel, the encrypted data has a larger size than the original data, and an encryption process of the original data needs to consume a period of time. In addition, a process of establishing the HTTPS channel may specifically include exchanging certificates, and the like. Therefore, compared with the HTTP channel, the HTTPS channel is advantageous in high security, but is disadvantages to a certain extent in the size of the transmitted data and time consumption.

One of the core concepts of the embodiments of the present application lies in that, a process of downloading an application package is divided into two steps, and different transmission protocol channels are used to perform the two steps. In a first step, download address information of an application is downloaded by using the HTTPS channel. In a second step, a first application package corresponding to the download address information obtained in the first step is downloaded by using the HTTP channel.

On the one hand, the HTTPS channel is a security-targeted HTTP channel and has higher security than the HTTP channel. Therefore, in comparison with the existing solution in which the download address information of the application is downloaded by using the HTTP channel, the embodiments of the present application can reduce the probability of hijacking the download address information, that is, can enhance the accuracy of the download address information, thus enhancing the accuracy of the locally downloaded first application package. Because a high-accuracy application package may reduce the number of times of cyclically downloading until verification succeeds, the embodiments of the present application can reduce traffic data required for downloading the application. Supposing that an application designated by a user to be downloaded is an application A, a download address of the application A is exactly downloaded by using the HTTPS channel in the embodiments of the present application. In this way, the accuracy of an application package of the locally downloaded application A can be enhanced, thus reducing the number of times of cyclically downloading until verification succeeds.

On the other hand, because the download address information of the application merely needs to occupy a few bytes, the encrypted download address information has little influence on the length of data transmission, and an encryption process of the download address information has little influence on time consumption. Therefore, using the HTTPS channel to download the download address information of the application basically may not increase the traffic data required for downloading the application.

### Embodiment I

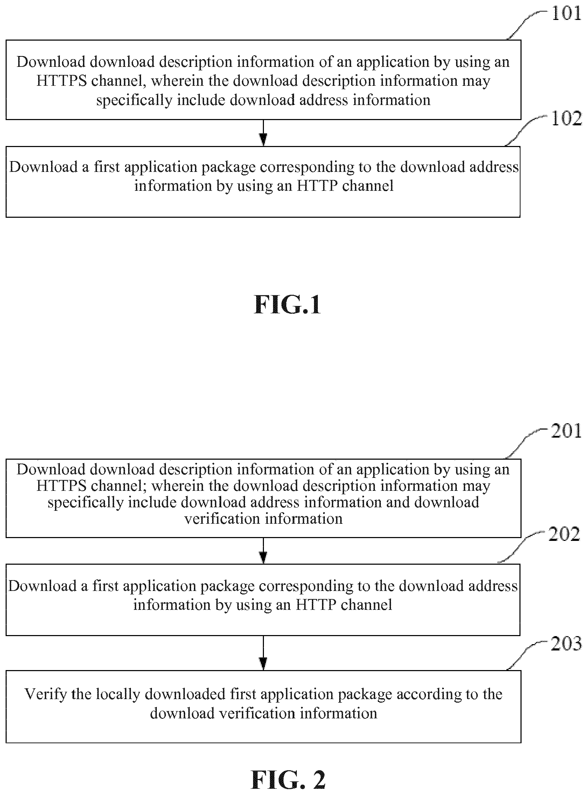

Referring to FIG. 1, FIG. 1 is a flowchart of steps of Embodiment I of an application download method according to the present application, which may specifically include the following steps:
Step 101: Download description information of an application is downloaded by using an HTTPS channel, wherein the download description information may specifically include download address information.
Step 102: A first application package corresponding to the download address information is downloaded by using an HTTP channel.

The embodiment of the present application may be applied to various application downloading tools having an application downloading function, such as an application market and a mobile phone management assistant. When a user uses these application downloading tools to download an application packet, the embodiment of the present application may reduce traffic data required for downloading the application package. Herein, the application package may specifically include an installation package, an upgrade package, or the like of an application.

The embodiment of the present application may provide the following technical solution in which the download description information of the application is downloaded by using the HTTPS channel.

### First technical solution

The first technical solution may download, in response to a download instruction of the user, download description information of an application corresponding to the download instruction by using the HTTPS channel. For example, if the user clicks a download button of an application A in an application downloading tool, it may be regarded that the user triggers a download instruction for the application A, and download description information of the application A corresponding to the download instruction is downloaded by using the HTTPS channel. It may be understood that, the user may trigger the foregoing download instruction in any manner, and the triggered instruction may correspond to any one or more applications. The embodiment of the present application does not limit a specific triggered instruction and a trigger manner thereof.

### Second technical solution

The second technical solution may download, when a download condition is met, download description information of an application corresponding to the download condition by using the HTTPS channel.

In a preferred embodiment of the present application, before the step of downloading a first application package corresponding to the download address information by using an HTTP channel, the method may further include: locally storing the download description information of the application corresponding to the download condition; and locally reading, in response to the download instruction of the user, the download description information of the application corresponding to the download instruction. Then, step 102 of downloading a first application package corresponding to the download address information by using an HTTP channel may specifically be downloading the first application package corresponding to the read download address information by using the HTTP channel. According to this preferred embodiment, when the download instruction is received from the user, the pre-stored download description information of the application corresponding to the download instruction may be directly read locally, thus enhancing the response efficiency and download efficiency for the download instruction.

In a specific implementation, the download condition may specifically include one or more of the following conditions: when an application downloading tool is enabled, when an application is enabled, and when a synchronization request from a server is received.

In an application example of the present application, when the download condition may be that the application downloading tool is enabled, the application corresponding to the download condition may include a pre-configured application, wherein the pre-configured application may include at least one of a popular application and a user configured application. The popular application may indicate an application of popular concern within a recent time period, which may be, for example, one or more applications that are the most frequently searched, downloaded, installed, or recommended by the user. The user configured application may indicate an application obtained through an interface configuration of the application downloading tool. When the application download too is enabled, a client terminal of the application downloading tool may send a first download request carrying information about the pre-configured application to a server terminal, to download download description information of the pre-configured application by using the HTTPS channel and locally store the downloaded download description information of the pre-configured application. Because the user has not triggered a download instruction when the application downloading tool is enabled, in this case, upon receiving the download instruction from the user, the pre-stored download description information of the application corresponding to the download instruction may be directly read locally, thus enhancing the response efficiency and download efficiency for the download instruction.

In another application example of the present application, when the download condition may be that an application is enabled, the application corresponding to the download condition may include an enable application or an application associated with the enable application. Herein, applications having an association may be determined by persons skilled in the art according to an actual situation; and the applications having an association may be applications of the same type, applications developed jointly, process-related applications, or the like. For example, WeChat APP (Application) and QQ APP are developed by the same developer, and therefore they have an association. For another example, Fight the Landlord APP and Tractor APP both belong to chess games, and therefore they have an association. For still another example, a shopping APP needs to use a payment APP, and therefore they have an association, for instance, JingDong APP and Alipay™ APP have an association. It may be understood that, the embodiment of the present application does not limit a specific association and specific applications having an association.

In still another application example of the present application, when the download condition may be that a synchronization request from a server is received, the application corresponding to the download condition may include an application corresponding to the synchronization request, or the like. In an actual application, when a new application uploaded by a developer or an application updated by a developer is detected, the server may send the synchronization request to a client terminal, and the synchronization request carries information about the new application or the updated application, such that the client terminal may download the download description information of the application corresponding to the synchronization request by using the HTTPS channel.

To sum up, in the embodiment of the present application, download address information of an application is downloaded first by using an HTTPS channel, and then a first application package corresponding to the download address information is downloaded by using an HTTP channel.

On the one hand, the HTTPS channel is a security-targeted HTTP channel and has higher security than the HTTP channel. Therefore, in comparison with the existing solution in which the download address information of the application is downloaded by using the HTTP channel, the embodiment of the present application can reduce the probability of hijacking the download address information, that is, can enhance the accuracy of the download address information, thus enhancing the accuracy of the locally downloaded first application package. Because a high-accuracy application package may reduce the number of times of cyclically downloading until verification succeeds, the embodiment of the present application can reduce traffic data required for downloading the application.

On the other hand, because the download address information of the application merely needs to occupy a few bytes, the encrypted download address information has little influence on the length of data transmission, and an encryption process of the download address information has little influence on time consumption. Therefore, using the HTTPS channel to download the download address information of the application basically may not increase the traffic data required for downloading the application.

### Embodiment II

Referring to FIG. 2, FIG. 2 is a flowchart of steps of Embodiment II of an application download method according to the present application, which may specifically include the following steps:
Step 201: Download description information of an application is downloaded by using an HTTPS channel, wherein the download description information may specifically include download address information and download verification information.
Step 202: A first application package corresponding to the download address information is downloaded by using an HTTP channel.
Step 203: The locally downloaded first application package is verified according to the download verification information.

Compared with Embodiment I, this embodiment adds content of the download verification information in the download description information, and adds into a process the step of verifying the locally downloaded first application package according to the download verification information.

In comparison with the existing solution in which the download verification information of the application is downloaded by using the HTTP channel, this embodiment can reduce the probability of hijacking the download address information and the download verification information, that is, can enhance a matching degree between the download address information and the download verification information. The download address information and the download verification information having a high matching degree may reduce the number of times of cyclically downloading until verification succeeds. Therefore, the embodiment of the present application can further reduce traffic data required for downloading the application.

Supposing that an application designated by a user to be downloaded is an application A, in an existing solution, a download address of an application B and download verification information of an application C are probably downloaded by using the HTTP channel. In the case where an error exists in the download address, the probability of downloading to obtain the application A is rather low. In the case where the download verification information (the application C) does not match the download address information (the application B), a success probability of verification is excessively low, thus greatly increasing the number of times of cyclically downloading.

In this embodiment, a download address of the application A and download verification information of the application A are exactly downloaded by using the HTTPS channel. In this way, the accuracy of a locally downloaded application package of the application A can be enhanced, and the success probability of verification can also be enhanced, thus greatly reducing the number of times of cyclically downloading until verification succeeds.

In an application example of the present application, before an application is downloaded, download description information of the application may be acquired from the server first by using the HTTPS channel, wherein the download description information may specifically include download verification information such as a URL (Uniform Resource Locator) of the application, abstract information of the application, or signature information of the application. Then, a first application package corresponding to the URL is downloaded by using the HTTP channel. After the downloading is finished, an abstract operation is performed on the locally downloaded first application package according to an abstract algorithm such as an MD5 (Message Digest Algorithm 5), or a signature operation is performed on the first application package by using a signature algorithm. Afterwards, a result of the abstract operation is compared with the abstract information of the application in the download description information, or a result of the signature operation is compared with the signature information of the application in the download description information. If a comparison result indicates that they are consistent, it indicates that the verification succeeds, and if the comparison result indicates that they are inconsistent, it indicates that the verification fails. It may be understood that, the download verification information and the corresponding verification process are merely used as examples, and the embodiment of the present application does not limit the specific download verification information and the corresponding verification process.

To sum up, this embodiment can enhance a matching degree between the download address information and the download verification information. The download address information and the download verification information having a high matching degree may reduce the number of times of cyclically downloading until verification succeeds. Therefore, the embodiment of the present application can further reduce traffic data required for downloading the application.

### Embodiment III

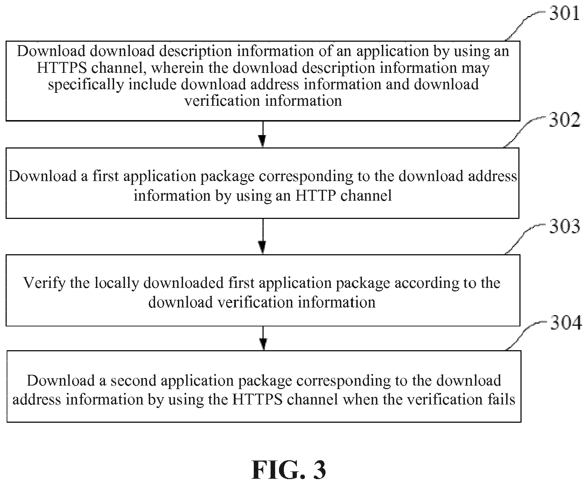

Referring to FIG. 3, FIG. 3 is a flowchart of steps of Embodiment III of an application download method according to the present application, which may specifically include the following steps:
Step 301: Download description information of an application is downloaded by using an HTTPS channel, wherein the download description information may specifically include download address information and download verification information.
Step 302: A first application package corresponding to the download address information is downloaded by using an HTTP channel.
Step 303: The locally downloaded first application package is verified according to the download verification information.
Step 304: A second application package corresponding to the download address information is downloaded by using the HTTPS channel when the verification fails.

Compared with Embodiment II, when the verification for the first application package fails, this embodiment may further download the second application package corresponding to the download address information by using the HTTPS channel.

Because this embodiment preferentially downloads the first application package corresponding to the download address information by using the HTTP channel, advantages of a small length of data transmission and less time consumption of the HTTP channel can be fully exerted, to save traffic data required for downloading the application as much as possible. Only when the verification for the first application package fails, this embodiment downloads the second application package corresponding to the download address information by using the HTTPS channel. In such a case, an advantage of high security of the HTTPS channel can be fully exerted, to control the number of times of downloading to be two (at the first time, the first application package corresponding to the download address information is downloaded by using the HTTP channel; and at the second time, when the verification fails, the second application package corresponding to the download address information is downloaded by using the HTTPS channel). Compared with an existing solution in which an application package is cyclically downloaded by using the HTTP channel many times, this embodiment can reduce the number of times of downloading, thus saving traffic data required for downloading the application.

In an actual application, because an event where data is hijacked in the HTTP channel occurs at a probability, when the first application package in the HTTP channel has not yet been hijacked, the embodiment of the present application can successfully download the application at the first time. When the application package in the HTTP channel is hijacked, the embodiment of the present application can successfully download the application by merely performing downloading for the first time and for the second time. Therefore, on the premise of ensuring a download success ratio, the embodiment of the present application can save traffic data required for downloading the application to a maximum extent.

### Embodiment IV

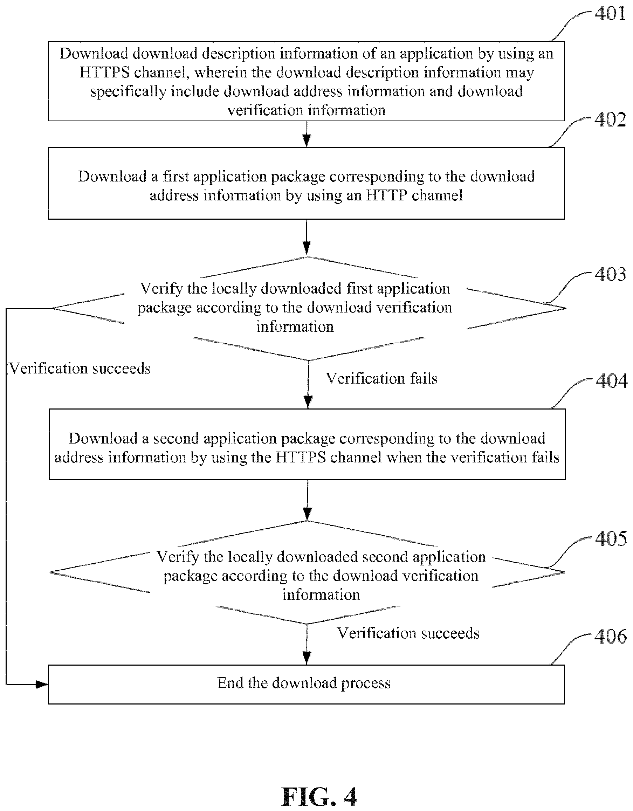

Referring to FIG. 4, FIG. 4 is a flowchart of steps of Embodiment IV of an application download method according to the present application, which may specifically include the following steps:
Step 401: Download description information of an application is downloaded by using an HTTPS channel, wherein the download description information may specifically include download address information and download verification information.
Step 402: A first application package corresponding to the download address information is downloaded by using an HTTP channel.
Step 403: The locally downloaded first application package is verified according to the download verification information, wherein if the verification succeeds, step 406 is performed; and if the verification fails, step 404 is performed.
Step 404: A second application package corresponding to the download address information is downloaded by using the HTTPS channel when the verification fails.
Step 405: The locally downloaded second application package is verified according to the download verification information, and if the verification succeeds, step 406 is performed.
Step 406: The download process is ended.

For step 405, a process of verifying the locally downloaded second application package according to the download verification information is similar to the verification process in step 403. Therefore, details are not described herein, and reciprocal reference may be made.

It should be noted that, when a verification result of step 405 indicates a verification failure, step 405 may also be repeatedly performed until the verification succeeds.

It should be noted that, for ease of description, the method embodiments are expressed as a series of action combinations, but persons skilled in the art should be aware that the embodiments of the present application are not subject to the sequence of the described actions, because in accordance with the embodiments of the present application, some steps may be performed in another order or at the same time. Secondly, the persons skilled in the art should further be aware that the embodiments described in the specification are preferred embodiments, and the actions involved are not necessary for the embodiments of the present application.

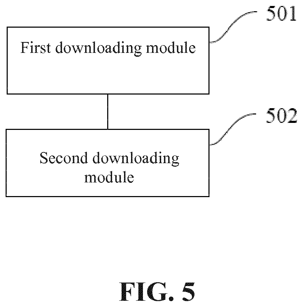

Referring to FIG. 5, FIG. 5 is a structural block diagram of an embodiment of an application download device according to the present application, which may specifically include the following modules:
a first downloading module 501 configured to download download description information of an application by using an HTTPS channel, wherein the download description information includes download address information; and
a second downloading module 502 configured to download a first application package corresponding to the download address information by using an HTTP channel.

In a preferred embodiment of the present application, the download description information may further include download verification information, and the device may further include:
a first verification module configured to verify the locally downloaded first application package according to the download verification information.

In another preferred embodiment of the present application, the device may further include:
a third downloading module configured to download a second application package corresponding to the download address information by using the HTTPS channel when the verification fails.

In still another preferred embodiment of the present application, the first downloading module 501 may further include:
a fourth downloading sub-module configured to download, in response to a download instruction of a user, download description information of an application corresponding to the download instruction by using the HTTPS channel; and/or
a fifth downloading sub-module configured to download, when a download condition is met, download description information of an application corresponding to the download condition by using the HTTPS channel.

In yet another preferred embodiment of the present application, the device may further include:
a storage module configured to locally store the download description information of the application corresponding to the download condition before the second downloading module 502 downloads the first application package corresponding to the download address information by using the HTTP channel; and
a reading module configured to locally read, in response to the download instruction of the user, the download description information of the application corresponding to the download instruction; and
the second downloading module 502 may be specifically configured to download the first application package corresponding to the read download address information by using the HTTP channel.

In a preferred embodiment of the present application, the download condition may specifically include one or more of the following conditions: when an application downloading tool is enabled, when an application is enabled, and when a synchronization request from a server is received.

In a preferred embodiment of the present application, when the download condition may be that the application downloading tool is enabled, the application corresponding to the download condition may specifically include a pre-configured application, wherein the pre-configured application may further include at least one of a popular application and a user configured application.

The device embodiment is basically similar to the method embodiment, and therefore is briefly described. Refer to the description of the method embodiment for related portions.

Embodiments in the specification are described in a progressive way, and each embodiment focuses on the difference from other embodiments. Reciprocal reference may be made for same or similar portions.

Persons skilled in the art should understand that, the embodiments of the present application may be provided as a method, a device, or a computer program product. Thus, the embodiments of the present application may take the form of a complete hardware embodiment, a complete software embodiment, or a combination of software and hardware embodiments. Moreover, the embodiments of the present application may take the form of a computer program product implemented on one or more computer-usable storage media (including but not limited to a disk memory, a CD-ROM, an optical memory, etc.) containing computer usable program codes.

In a typical configuration, the computer device includes one or more processors (CPUs), input/output interfaces, network interfaces, and memories. The memory may include a non-permanent memory, a random access memory (RAM), and/or a nonvolatile memory, such as a read-only memory (ROM) or a flash memory (flash RAM), in computer-readable media. The memory is an example of the computer-readable media. The computer-readable media include permanent and non-permanent, or mobile and immobile media that may implement information storage by any method or technology. The information may be a computer readable instruction, a data structure, a module of a program, or other data. Examples of computer storage media include, but are not limited to, a phase change memory (PRAM), a static random access memory (SRAM), a dynamic random access memory (DRAM), other types of random access memories (RAM), a read-only memory (ROM), an electrically erasable programmable read-only memory (EEPROM), a flash memory body or other memory technologies, a compact disc read-only memory (CD-ROM), a digital versatile disc (DVD) or other optical storages, a cassette, tape and disk storages or other magnetic storage devices, or any other non-transmission medium that can be used to store information capable of being accessed by a computing device. As defined herein, the computer-readable media do not include non-persistent computer-readable media (transitory media), such as modulated data signals and carriers.

The embodiments of the present application are described with reference to a flowchart and/or a block diagram of a method, a terminal device (system), and a computer program product according to the embodiments of the present application. It should be understood that, each process and/or block in the flowchart and/or block diagram, as well as a combination of processes and/or blocks in the flowchart and/or block diagram may be implemented by using computer program instructions. These computer program instructions may be provided to a processor of a general purpose computer, a dedicated computer, an embedded processing machine, or another programmable data processing terminal device to generate a machine, such that a device for implementing functions specified in one or more processes of the flowchart and/or one or more blocks of the block diagram is generated by using instructions executed by the processor of the computer or another programmable data processing terminal device.

These computer program instructions may also be stored in a computer readable memory capable of instructing a computer or another programmable data processing terminal device to operate in a particular manner, such that the instructions stored in the computer readable memory produce a manufacturing product comprising an instruction device. The instruction device implements the functions specified in one or more processes of the flowchart and/or one or more blocks of the block diagram.

These computer program instructions may also be loaded onto a computer or another programmable data processing terminal device, such that a series of operational steps are performed on the computer or another programmable terminal device to generate computer-implemented processing. Then, the instructions executed on the computer or another programmable terminal device provide steps for implementing the functions specified in one or more processes of the flowchart and/or one or more blocks of the block diagram.

Finally, it should also be noted that, in this specification, relational terms such as "first" and "second" are used only to distinguish one entity or operation from another entity or operation without necessarily requiring or implying that there is any such actual relationship or sequence between these entities or operations. Moreover, the term "include", "comprise", or any other variant thereof is intended to encompass a non-exclusive inclusion, such that a process, a method, an object, or a terminal device that includes a series of elements not only includes those elements, but also includes other elements not explicitly listed or elements inherent to this process, method, object, or terminal device. In the absence of more restrictions, the elements defined by the statement "including a..." do not preclude the presence of other identical elements in the process, method, object, or terminal device that includes the elements.

An application download method and device provided in the present application are described in detail above. The principle and implementations of the present application are described by using specific examples. The aforementioned embodiments are meant to be examples useful for understanding the invention. The present invention is only defined by the appended claims.

## Claims

1. A method for downloading an application, the method comprising:
downloading (101), (201), (301) download description information of the application using an HTTPS channel, wherein the download description information comprises download address information and wherein downloading download description information of an application using an HTTPS channel comprises:
downloading, when a download condition is met, download description information of a pre-configured application corresponding to the download condition using the HTTPS channel, wherein
the download condition comprises that the application downloading tool is enabled, and
the pre-configured application comprises at least one of a popular application and a user configured application; and
downloading (102), (202), (302) a first application package corresponding to the download address information of the pre-configured application using an HTTP channel.

2. The method of claim 1, wherein the download description information further comprises download verification information, and the method further comprises verifying (203), (303) the locally downloaded first application package according to the download verification information.

3. The method of claim 2, wherein the download verification information comprises a uniform resource locator of the application, abstract information of the application, or signature information of the application.

4. The method of claim 2 or 3, wherein verifying the locally downloaded first application package comprises:
performing an abstract operation on the first application package according to an abstract algorithm or performing a signature operation on the first application package;
comparing a result of the abstract operation or signature operation to the download description information; and
in response to the comparison indicating that the result of the abstract operation or signature operation is consistent with the download description information, indicating that the verification succeeds.

5. The method of claim 4, wherein the abstract operation comprises an operation that is specified for abstract data types, and optionally wherein the abstract algorithm comprises an MD5 algorithm.

6. The method of any one of claims 2 to 5, further comprising downloading (304) a second application package corresponding to the download address information using the HTTPS channel when the verification fails.

7. The method of claim 1, wherein downloading download description information of an application using an HTTPS channel further comprises downloading, in response to a download instruction of a user, download description information of an application corresponding to the download instruction using the HTTPS channel.

8. The method of claim 7, wherein before downloading a first application package corresponding to the download address information using an HTTP channel, the method further comprises:
locally storing the download description information of the application corresponding to the download condition, and
locally reading, in response to the download instruction of the user, the download description information of the application corresponding to the download instruction; and
wherein the step of downloading a first application package corresponding to the download address information using an HTTP channel comprises: downloading the first application package corresponding to read download address information using the HTTP channel.

9. The method of claim 7 or 8, wherein the download condition further comprises when a synchronization request from a server is received.

10. A device for downloading an application, comprising multiple modules (501), (502) configured to perform the method of any one of claims 1 to 9.

## Patentansprüche

1. Verfahren zum Herunterladen einer Anwendung, wobei das Verfahren Folgendes umfasst:
Herunterladen (101), (201), (301) von Herunterladebeschreibungsinformationen der Anwendung unter Verwendung eines HTTPS-Kanals, wobei die Herunterladebeschreibungsinformationen Herunterladeadressinformationen umfassen und wobei das Herunterladen von Herunterladebeschreibungsinformationen einer Anwendung unter Verwendung eines HTTPS-Kanals Folgendes umfasst:
Herunterladen, wenn eine Herunterladebedingung erfüllt ist, von Herunterladebeschreibungsinformationen einer vorkonfigurierten Anwendung, die der Herunterladebedingung entspricht, unter Verwendung des HTTPS-Kanals,
wobei die Herunterladebedingung umfasst, dass das Anwendungsherunterlade-Tool aktiviert ist und
die vorkonfigurierte Anwendung eine beliebte Anwendung und/oder eine von dem Benutzer konfigurierte Anwendung umfasst; und
Herunterladen (102), (202), (302) eines ersten Anwendungspakets, das den Herunterladeadressinformationen der vorkonfigurierten Anwendung entspricht, unter Verwendung eines HTTP-Kanals.

2. Verfahren nach Anspruch 1, wobei die Herunterladebeschreibungsinformationen ferner Herunterladeverifizierungsinformationen umfassen, und das Verfahren ferner ein Verifizieren (203), (303) des lokal heruntergeladenen ersten Anwendungspakets gemäß den Herunterladeverifizierungsinformationen umfasst.

3. Verfahren nach Anspruch 2, wobei die Herunterladeverifizierungsinformationen einen einheitlichen Ressourcenanzeiger der Anwendung, abstrakte Informationen der Anwendung oder Signaturinformationen der Anwendung umfassen.

4. Verfahren nach Anspruch 2 oder 3, wobei das Verifizieren des lokal heruntergeladenen ersten Anwendungspakets Folgendes umfasst:
Durchführen eines abstrakten Ablaufs an dem ersten Anwendungspaket gemäß einem abstrakten Algorithmus oder Durchführen eines Signaturablaufs an dem ersten Anwendungspaket;
Vergleichen eines Ergebnisses des abstrakten Ablaufs oder des Signaturablaufs mit den Herunterladebeschreibungsinformationen; und
als Reaktion auf den Vergleich, Anzeigen, dass das Ergebnis des abstrakten Ablaufs oder des Signaturablaufs mit den Herunterladebeschreibungsinformationen einheitlich ist, das anzeigt, dass die Verifizierung gelingt.

5. Verfahren nach Anspruch 4, wobei der abstrakte Ablauf einen Ablauf umfasst, der für abstrakte Datenarten festgelegt ist, und optional wobei der abstrakte Algorithmus einen MD5-Algorithmus umfasst.

6. Verfahren nach einem der Ansprüche 2 bis 5, ferner umfassend das Herunterladen (304) eines zweiten Anwendungspakets, das den Herunterladeadressinformationen entspricht, unter Verwendung des HTTPS-Kanals, wenn die Verifizierung fehlschlägt.

7. Verfahren nach Anspruch 1, wobei das Herunterladen der Herunterladebeschreibungsinformationen einer Anwendung unter Verwendung eines HTTPS-Kanals ferner das Herunterladen, als Reaktion auf eine Herunterladeanweisung eines Benutzers, von Herunterladebeschreibungsinformationen einer Anwendung, die der Herunterladeanweisung entsprechen, unter Verwendung des HTTPS-Kanals umfasst.

8. Verfahren nach Anspruch 7, wobei vor dem Herunterladen eines ersten Anwendungspakets, das den Herunterladeadressinformationen entspricht, unter Verwendung eines HTTP-Kanals, das Verfahren ferner Folgendes umfasst:
lokales Speichern der Herunterladebeschreibungsinformationen der Anwendung, die der Herunterladebedingung entsprechen, und lokales Lesen, als Reaktion auf die Herunterladeanweisung des Benutzers, der Herunterladebeschreibungsinformationen der Anwendung, die der Herunterladeanweisung entsprechen; und
wobei der Schritt des Herunterladens eines ersten Anwendungspakets, das den Herunterladeadressinformationen entspricht, unter Verwendung eines HTTP-Kanals Folgendes umfasst:
Herunterladen des ersten Anwendungspakets, das den gelesenen Herunterladeadressinformationen entspricht, unter Verwendung eines HTTP-Kanals.

9. Verfahren nach Anspruch 7 oder 8, wobei die Herunterladebedingung ferner umfasst, wann eine Synchronisierungsanfrage von einem Server empfangen wird.

10. Vorrichtung zum Herunterladen einer Anwendung, die mehrere Module (501), (502) umfasst, die konfiguriert sind, um das Verfahren nach einem der Ansprüche 1 bis 9 durchzuführen.

## Revendications

1. Procédé de téléchargement d'une application, le procédé comprenant :
le téléchargement (101), (201), (301) d'informations de description de téléchargement de l'application à l'aide d'un canal HTTPS, les informations de description de téléchargement comprenant des informations d'adresse de téléchargement et le téléchargement des informations de description de téléchargement d'une application à l'aide d'un canal HTTPS comprenant :
le téléchargement, lorsqu'une condition de téléchargement est remplie, des informations de description de téléchargement d'une application préconfigurée correspondant à la condition de téléchargement à l'aide du canal HTTPS, la condition de téléchargement comprenant le fait que l'outil de téléchargement d'application est activé, et l'application préconfigurée comprenant au moins l'une d'une application populaire et d'une application configurée par l'utilisateur ; et
le téléchargement (102), (202), (302) d'un premier progiciel d'application correspondant aux informations d'adresse de téléchargement de l'application préconfigurée à l'aide d'un canal HTTP.

2. Procédé selon la revendication 1, dans lequel les informations de description de téléchargement comprennent en outre des informations de vérification de téléchargement, et le procédé comprend en outre la vérification (203), (303) du premier progiciel d'application téléchargé localement en fonction des informations de vérification de téléchargement.

3. Procédé selon la revendication 2, dans lequel les informations de vérification de téléchargement comprennent un localisateur de ressources uniforme de l'application, des informations abstraites de l'application ou des informations de signature de l'application.

4. Procédé selon la revendication 2 ou 3, dans lequel la vérification du premier progiciel d'application téléchargé localement comprend :
la réalisation d'une opération abstraite sur le premier progiciel d'application selon un algorithme abstrait ou la réalisation d'une opération de signature sur le premier progiciel d'application ;
la comparaison d'un résultat de l'opération abstraite ou de l'opération de signature aux informations de description de téléchargement ; et
en réponse à la comparaison indiquant que le résultat de l'opération abstraite ou de l'opération de signature est cohérent avec les informations de description de téléchargement, l'indication que la vérification est réussie.

5. Procédé selon la revendication 4, dans lequel l'opération abstraite comprend une opération qui est spécifiée pour des types de données abstraits, et éventuellement l'algorithme abstrait comprenant un algorithme MD5.

6. Procédé selon l'une quelconque des revendications 2 à 5, comprenant en outre le téléchargement (304) d'un second progiciel d'application correspondant aux informations d'adresse de téléchargement à l'aide du canal HTTPS lorsque la vérification échoue.

7. Procédé selon la revendication 1, dans lequel le téléchargement des informations de description de téléchargement d'une application à l'aide d'un canal HTTPS comprend en outre le téléchargement, en réponse à une instruction de téléchargement d'un utilisateur, d'informations de description de téléchargement d'une application correspondant à l'instruction de téléchargement à l'aide du canal HTTPS.

8. Procédé selon la revendication 7, dans lequel avant le téléchargement d'un premier progiciel d'application correspondant aux informations d'adresse de téléchargement à l'aide d'un canal HTTP, le procédé comprend en outre :
le stockage local des informations de description de téléchargement de l'application correspondant à la condition de téléchargement, et la lecture locale, en réponse à l'instruction de téléchargement de l'utilisateur, des informations de description de téléchargement de l'application correspondant à l'instruction de téléchargement ; et
l'étape de téléchargement d'un premier progiciel d'application correspondant aux informations d'adresse de téléchargement à l'aide d'un canal HTTP comprenant :
le téléchargement du premier progiciel d'application correspondant à la lecture des informations d'adresse de téléchargement à l'aide du canal HTTP.

9. Procédé selon la revendication 7 ou 8, dans lequel la condition de téléchargement comprend en outre la réception d'une demande de synchronisation d'un serveur.

10. Dispositif de téléchargement d'une application, comprenant plusieurs modules (501), (502) configurés pour exécuter le procédé selon l'une quelconque des revendications 1 à 9.
